# EUROPEAN PATENT APPLICATION

(11) **EP 0 777 201 A2**
(43) Date of publication of application: **04.06.1997**
(21) Application number: 96500025.0
(22) Date of filing: 27.02.1996
(51) Int. Cl.: G07F 9/10, A21C 15/00

(54) **Machine for the preparation and sale of hot sandwiches**

(30) Priority: 23.11.1995 ES 9502298
(71) Applicant: Ruiz Huertas, José Maria, 08206 Sabadell (Barcelona) (ES); Miro Pepio, Rosa Maria, 08206 Sabadell (Barcelona) (ES)
(72) Inventor: Ruiz Huertas, José Maria, 08206 Sabadell (Barcelona) (ES)
(74) Representative: Pastells Teixido, Manuel

(57) **Abstract**

It consists of a storage carriage (1) carrying two blocks (2, 3) of food that are cut sequentially in slices upon displacing the storage carriage toward the blade (8). The food slices are deposited over a slice of bread (7) originating from a storage container (6) provided with a bread slice lifter. The bread slice with the food slices is moved to a grill (11) with a lower grid (13) displaceable in vertical movements. A second bread slice (15) originating from a storage container (14) provided with lifter, is deposited over the first. The grid (13) then ascends and lightly compresses the formed sandwich which, once heated, is pushed toward an exit platform (18) with two gates (23 and 26). The sandwich and a napkin (24) are served together.

## Description

The present invention relates to a machine for the preparation and sale of hot sandwiches, provided with a series of perfectly synchronized mechanisms, it prepares the sandwiches and serves them hot in a short period of time from the moment in which the stipulated coins have been deposited in the coin slot.

### BACKGROUND OF THE INVENTION

Currently known machines for the preparation of hot sandwiches are of two slices of bread each coming from storage containers, in which they are stacked and deposited two by two over a fixed grid and a moveable one within a grill. Over one of the slices of bread, two slices of other solid food products, for example of ham and cheese, are deposited and stacked in a moveable container, from where they are extracted sequentially and deposited over a slice of bread, by means of a pneumatic suction conveyor. Once the slices of food are deposited on a slice of bread, the moveable grill grid that places the other slice of bread on top of the one carrying the food slices is activated, so as to begin the heating of the formed sandwich, that will be deposited on an exit platform so that the buyer can take it away.

An embodiment of this type is described in utility model U 9203218.

This type of machine has the disadvantage that the food products destined to be placed between the slices of bread, are previously cut in slices which are transported to a slice of bread by means of a pneumatic suction mechanism. This system impairs the preservation of the food products that dry out more easily if they are stored precut, instead of maintaining them in block form and slicing them every time there is a demand for a sandwich. Moreover, the suction mechanism is complicated, and the movements the latter is intended to make in order to convey the bread slices increase the required preparation time for a sandwich.

Machines are also known in which food is in the form of blocks housed in container moveable compartments protruding from the lower side, being said blocks cut in slices by means of a knife blade, such as happens in the machine disclosed in US-A-1 973 195, albeit these machines do not heat the sandwich and are very complex, being employed for the different movements basically chains and teeth-chains.

### DESCRIPTION OF THE INVENTION

With the aim of resolving the above disadvantages, this machine for the preparation and sale of hot sandwiches has been devised as the object of the invention.

The machine in question is characterized by the fact that the bread slice containers have the upper base open for the exiting of the bread slices which are pushed by a lifter located beneath the stacked bread slices. The open base of one of the containers is at the same height as a moveable platform located beneath the fixed plate, between the said plate and the moveable platform running a pusher that displaces the upper bread slice until it is situated on the moveable platform which performs forward and backward movements in order to displace the bread slice locating it beneath the food blocks, so that the cut slices are deposited over the bread slice. On top of the aforementioned platform runs a second pusher that displaces the bread slice with the food slices to a lower plane of a moveable layered separator which is situated between the grids of the grill. This separator has an upper plane situated at the height of a second storage container of bread slices. Substantially, at the same level as that of the open base there is a pusher that situates a bread slice in the upper plane of the separator, displaceable with respect to the position of the grill which, in its turn is provided with carriage stops that secure the bread slices with the corresponding food slices in between, forming the sandwich.

More specifically, the storage containers containing the stacked bread slices are open at their lower and upper ends. Rotating drums carrying a series of box containers of stacked refill bread slices are below each one of these storage containers, and are designed to interface with the lower bases of the containers to be elevated as a function of sandwich demand.

Each drum is mounted on an oscillating arm in order to locate them in the work or repose positions.

The aforementioned drums are located at different heights so as not to interfere with one another in the work position, while the container that is positioned on top of the drum and located at a lesser elevation has a longitudinal extension in the lower part which is equal to the height of the drum.

Facing the grill, an exit platform is located between two gates, the prior an oscillating gate and the latter a curtain style runner.

Additionally, the machine is equipped with a napkin distributing mechanism with an opening that empties onto the exit platform.

The grill consists of an upper fixed grid and a lower displaceable grid with capacity for vertical movement.

Advantageously, the food block container is refrigerated.

Even though the machine has an acceptable performance, some problems may arise within the phase of passing the lower bread slice from its storage container to the moveable platform, wherein it has to receive the food slices, on the one hand, and the phase of displacing the upper bread slice from its storage container to the separator, on the other hand. Such problems may be caused by the fact that the bread slices are not as uniform as necessary, having some warping or deformation, which would hinder their displacing in the correct position.

For solving the above problems it is foreseen that each corresponding pusher is formed by a conveying arm which "takes" the corresponding bread slice from the respective storage container, conveys the bread slice and "releases" it on a tray, equivalent to the moveable platform, in the case of the upper bread slice, and on the separator, in the case of the lower bread slice.

Said two conveying arms are connected to a suction means comprising, at its operative end, a lower opening wherein the bread slice is retained by suction.

In the case of the lower bread slice, the arm which conveys it , performs, on its horizontal plane, an arcuate upward movement from the storage container, and a downward movement to the tray, and vice versa, in order to cross the edges of the tray.

In the case of the upper bread slice, the arm conveying it performs, also on its horizontal plane, a plane displacement from its storage container to the separator.

### BRIEF DESCRIPTION OF THE DRAWINGS

For more complete comprehension of what is described here, there are some accompanying appended drawings in which a practical example of the embodiment of the machine for the preparation and sale of hot sandwiches is represented only by way of example.

In the aforementioned drawings,
figure 1 is a perspective view of the machine's principal components;
figure 2 is a plan view of said components;
figure 3 is a section view of the plane III-III of figure 2;
figure 4 is a section view of plane IV-IV of figure 2;
figure 5 is a similar view to that of figure 4, but with the bread slice separator isolated with respect to the grill;
figure 6 is a similar detail to those of figures 4 and 5, showing the moment in which the separator is withdrawn;
figure 7 is a view of the plane VII-VII of figure 2
figures 8, 9, and 10 display a raised detail of the different movement sequences of the food block container during bread slicing ;
figures 11 and 12 illustrate, in respective schematic elevation views, the conveyor arm of the lower bread slice, located for the retrieval of the bread slice from the storage container and for the placement of the same on the tray ; and
figures 13 and 14 show, in respective schematic elevation views, the conveyor arm of the upper bread slice, located for the retrieval of the bread slice from the storage container and for the delivering of the same on the separator.

### DESCRIPTION OF THE PREFERRED EMBODIMENT

The machine for the preparation and sale of hot sandwiches, exemplified in the drawings, comprises a storage carriage 1 displaceable in longitudinal oscillatory movements, and is provided with two interior compartments in which a block of ham and another of cheese respectively are stored in the vertical position. The carriage 1 has an open lower base la through which protrude the ends of the two blocks 2, 3 , that are supported on a plate 1b situated on top of a moveable platform 4 capable of realizing longitudinal oscillatory movements, provided with a window 5 that is connected with a vertical storage container 6 in which bread slices 7 are stacked, and pushed sequentially upward by a lifting mechanism, which is located below the bread slices and not shown here. The frontal extreme of the platform 4 has a folded wing 4a and a projection 4b that form carriage stops in order to center the position of the bread slices 7 joined on the platform 4. The carriage 1 is conveniently refrigerated in order to conserve the food blocks 2, 3 in the best possible conditions of freshness.

A rotating blade 8 is mounted in a displaced forward position with respect to the window 5, more elevated than the moveable platform 4, in a plane situated below the base la. The blade may be of any type, for example a steel wire in tension. The lower ends of the blocks 2 and 3 protrude slightly from the open base 1a of the carriage 1 and are supported on a fixed plate 1b. The plate 1b ends just at the height of the blade edge 8.

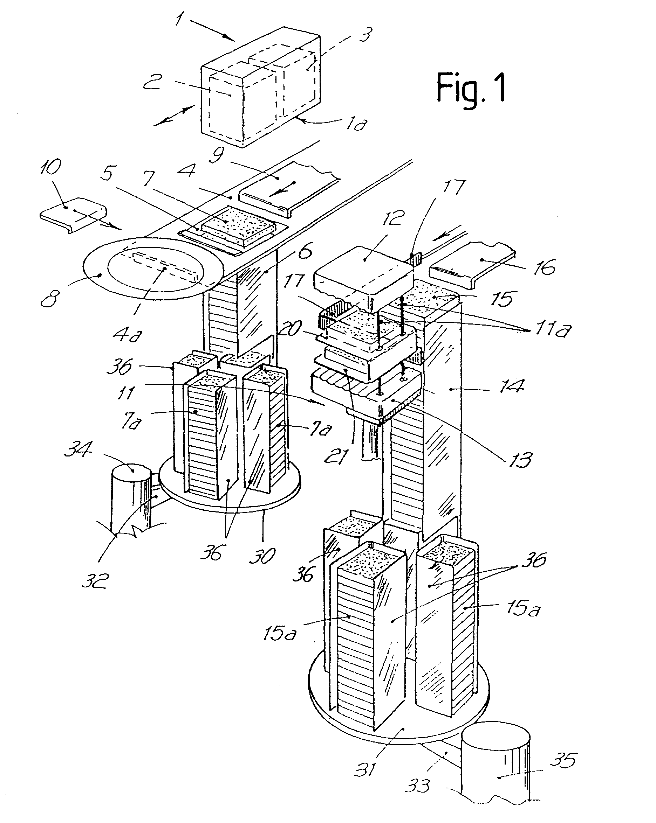

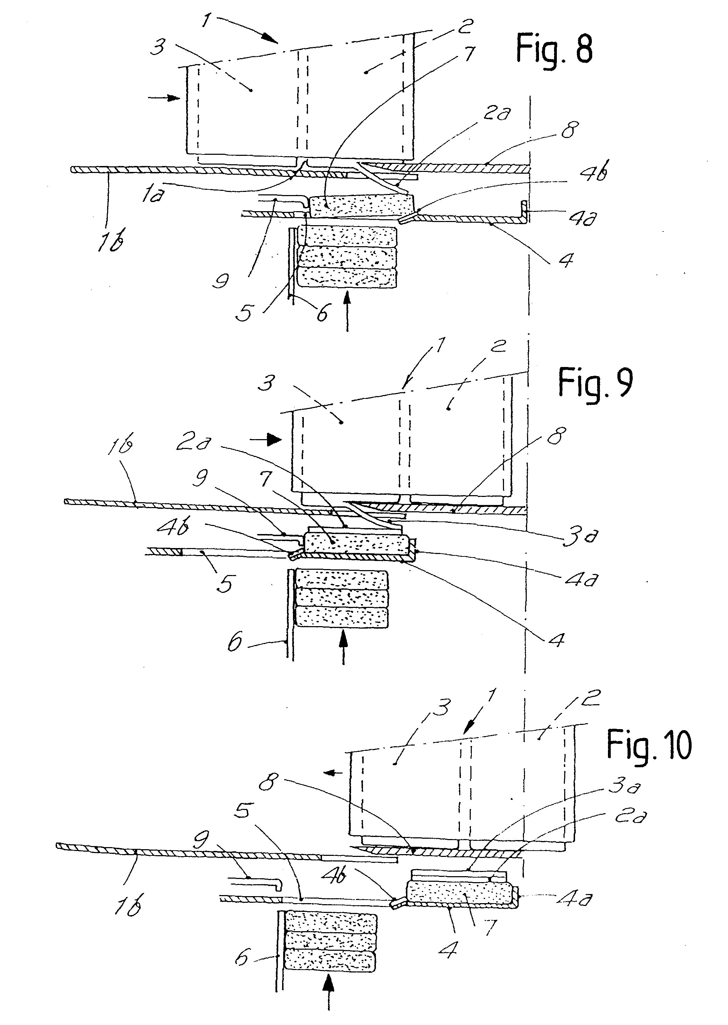

Above the moveable platform 4 a pusher 9 is situated and lined up with the window 5, displaceable in synchronized oscillatory movements, from a prior position of repose (figures 1 & 8) to a work position, in which it goes beyond the window 5 (figures 9 and 10).

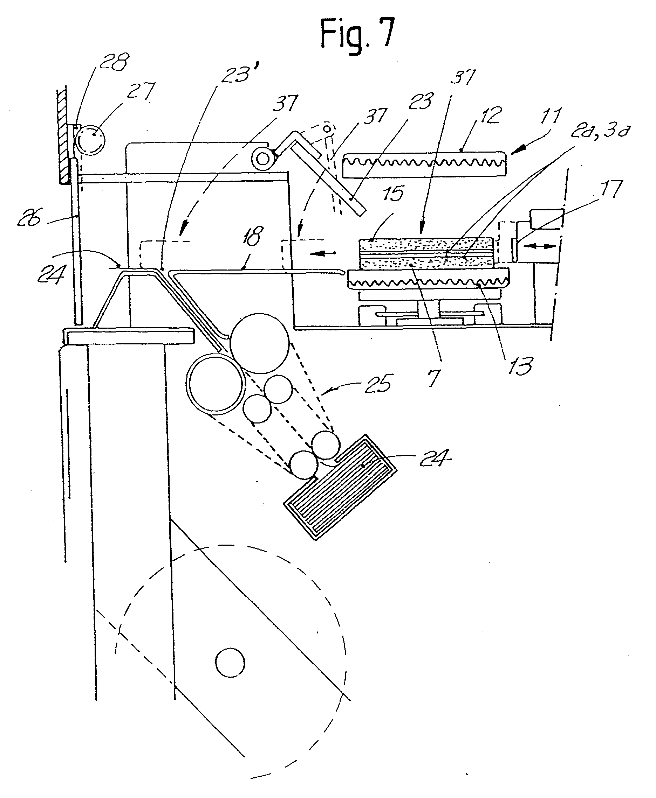

A pusher 10 is situated in a lateral or transverse position with respect to the frontal extreme of the which are supplied by a conventional mechanism 25 (figure 7). In front of the platform 18 there is a door 26 of the vertically displaceable curtain type, according to synchronized movements, proportioned by a motor 29 and transmitted by a rack 28 and pinion 27.

Below each storage container 6 and 14 there is a corresponding rotating drum 30,31 mounted on oscillatory arms 32, 33 on axis 34,35. These drums support refill bread slice 7a, 15a storage containers 36 to feed the storage containers 6,14 when they are emptied. By means of an adequate detection system, the replacement storage containers 36 are positioned below the main storage containers 6,14 in order to replace the exhausted bread slices. In this way the capacity of the cited storage containers is augmented by the replacement storage containers 36. The drum 30 occupies a more elevated position with relation to the drum 31, the height difference between them being somewhat greater than the height of the storage containers 36, so that those of each drum do not interfere with each other upon occupying the work position.

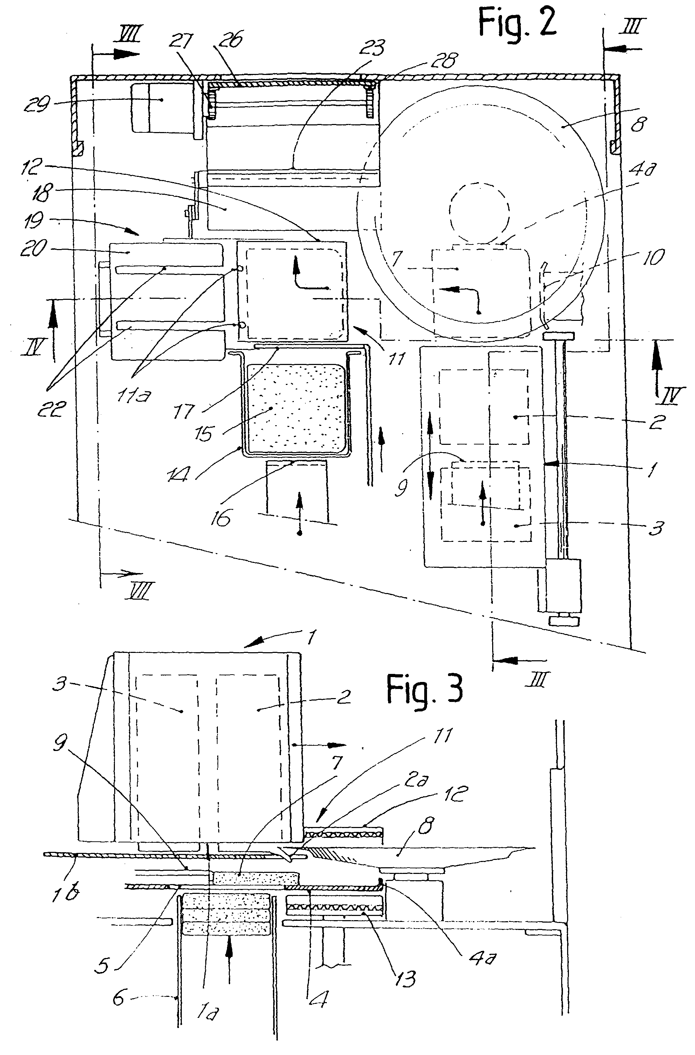

As one would deduce from the description and from the observation of the drawings, when coins are placed in the machine's coin slot, not shown, the machine is activated and initiates the preparation and supply cycle of a hot sandwich. In the first phase of the cycle, the carriage 1 advances in the direction of the blade 8 that, if it is revolving like in the illustrated example, is turned by an electric motor. The lower extreme of the first food block 2 upon reaching the blade 8 and continuing its advance, is sliced 2a (figure 8). The storage container lifter 6 will have previously placed the upper bread slice 7 above the window 5 so that the pusher 9 displaces it forward, below the food slice 2a that is deposited on the bread slice 7. Consequently, moveable platform 4, and at the height of the same platform, it is aligned with the grill of general reference 11 consisting of an upper fixed grid12 and a lower grid 13 that is displaced vertically with respect to the grill 12. The pusher 10 is displaced from a position of repose outside the moveable platform 4 (figures 1 and 2) to a work position in which it is situated at one side of the grill 11 (figure 4) and between the two grids 12,13, there are some vertical rods 11a that constitute an immobilizing carriage stop for the bread slices.

Behind the grill 11 and in a plane situated between the grids 12,13, the upper base of the bread slice vertical storage container 14,15 is located, behind which is located the pusher 16 that performs synchronized oscillatory movements, from a withdrawn position (figure 1), to a work position in which it surpasses the upper base of the storage container 14 of bread slices 15. In front of the grill 11, there is another pusher 17 in a somewhat lower position with respect to the first pusher 16 which is displaced in longitudinal synchronized oscillatory movements, moving from the front of the grill until reaching the exit platform 18 (figure 7).

Facing the carriage stop rods 11a of the grill 11 there is a separator box 19 with two horizontal planes 20,21 at different heights, displaceable in synchronized movements from a position outside of the grill 11 (figures 2, 5 and 6), at an interior position between the two grill grids 12,13 (figures 1 and 4). The planes are provided with recesses 22 aligned with respect to the position of the rods 11a of the grill 11 (figure 2).

Mounted on the internal part of the exit platform 18 is an oscillatory gate 23 which tends to maintain itself in a closed position. A slot 23 empties out on the platform 18 for the sequential exiting of napkins 24 the platform 4 recedes until situating itself in line with the block 3; the carriage performs a new advance toward the blade 8 that cuts a slice 3a which is deposited over the food slice 2a (figure 9). When this phase is finalized, the bread slice 7 with the food slices 2a, 3a remains situated on the platform 4, under the blade 8 (figure 10), facing the transverse pusher 10 (figure 2).

In the next phase, the pusher 10 moves the bread slice with the two food slices to the lower plane 21 of the separator 19 which has been previously placed between the two grids 12, 13 of the grill 11, avoiding the rods 11a due to their longitudinal recesses 22. In this position, the storage container lifter (not shown) 14, has pushed the bread slices 15 upwards, so as to make the upper one protrude sufficiently amount so that the pusher 16 moves it until placing it on the upper plane 20 of the separator 19 (figure 4). The separator 19 then recedes so as to lay the bread slice 15 over the two food slices 2a, 3a which are over the bread slice 7 (figure 6), that remains stationary over the lower grid 13 of the grill 11, due to the fact that the rods prevent bread slice displacement, thus finishing a sandwich 37 preparation.

Subsequently, the mechanism that lifts the lower grid 13 of the grill 11 is activated, until the sandwich is lightly pressed between the two grill grids 12, 13, which are heated to a predetermined temperature for a previously set time and are adjustable at will.

Once the set time has elapsed, the hot sandwich 37 is ready to be sold to the buyer. For this purpose, the lifter actuating the motion of the lower grill 13 is first activated so that the latter descends with the finished sandwich to locate it in a position facing the pusher 17 which displaces it to the exit platform 18 (figure 7), at the same time that the gate 23 opens. In the same manner, the napkin 24 supply mechanism 25 is activated, depositing one of said napkins in the slot 23, protruding therefrom. The motor 29 which initiates the pinion 27 is also activated thus engaging the rack 28 of the curtain style gate 26 that raises so as to permit the buyer to withdraw the sandwich and the napkin. A detector notes that the sandwich has been withdrawn and transmits an order to the corresponding mechanisms in order to close the doors, thus readying the machine to prepare and sell another sandwich.

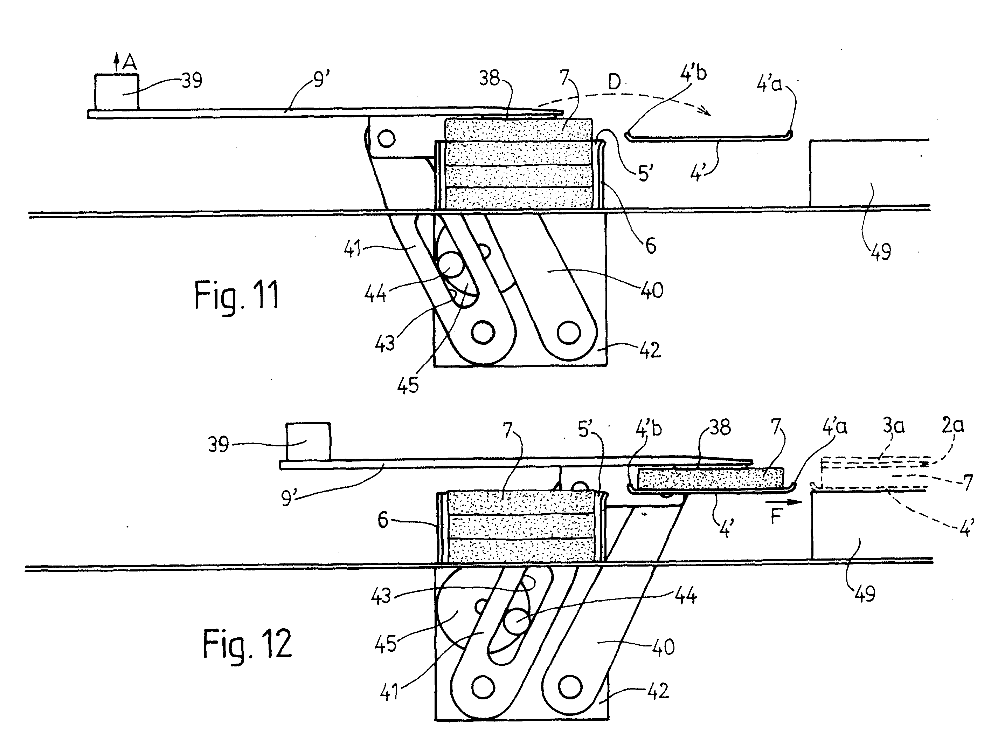

According to figures 11 and 12, instead of a moveable platform 4, a tray 4' is provided, which also performs forward and backward longitudinal movements and which, on an initial position is situated beside the upper opening 5' of the vertical storage container 6, wherein the bread slices 7, corresponding to the lower sandwiches' slices, are stacked, being each of said bread slices to be centrally arranged on said tray between end edges constituted by bent fins 4'a and 4'b.

The displacement of the bread slices 7 from the storage container 6 to the said tray 4' is caused by a conveying arm 9', arranged horizontally and in alignment with the storage container opening 5', which on its operative end has a suction lower opening 38 and which, by means of suction, picks the bread slice, is elevated, is moved downwards and then places the bread slice on the tray 4' upon ceasing of the sucking (figure 12), according to synchronized backward and forward movements.

On its other end, said arm 9' has a mouthpiece 39 which will engage the suction pipe A, and which is articulated to two arms 40 and 41 articulated in its turn, at its lower part, to a support 42, the arm 41 comprising a guide 43 wherein the head 44 of an eccentric 45 runs, so that upon rotation of the latter an angular displacement of the arms 41 and 42 is obtained, thus causing the arm 9' to be moved according to a circular movement D.

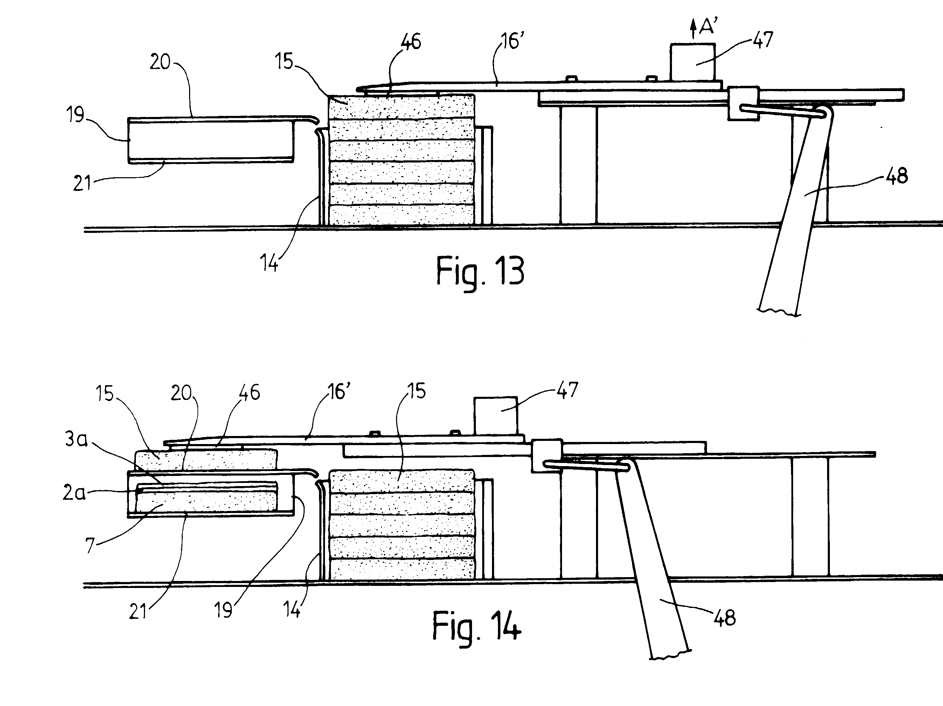

Once ham slices 2a and cheese slices 3a are deposited on the bread slice 7 located in the tray 4', the latter is displaced F towards an area 49 wherein both food slices and bread slices are transversely pushed to a lower plane 21 of the separator 19, on which upper plane 20 the upper bread slice 15 of the sandwich (figure 13) is subsequently placed, being its separator located between the grill grids.

The upper bread slices 15 vertical storage container 14 is arranged behind the grill, being the said bread slices moved until situating them over the separator 19 by means of a conveying arm 16', provided at its operative end with a lower opening 46, which performs synchronized backward and forward movements from a position in which said lower opening 46 is over the first bread slice 15 in the storage container 14, taking it by means of suction, to a position in which the bread slice is deposited on the separator 19 upon ceasing of the sucking (figure 14).

Said arm 16' has, at its end opposite the mouth 46, a socket 47 for coupling it to the suction pipe.

Said arm performs a movement describing a plane path and is articulated to a tie rod 48 angulary driven by a cam mechanism (not shown).

Once the separator 19 is withdrawn, the sandwich is heated in the grill, being afterwards pushed to the exit platform.

The machine in question has the advantage, with respect to other known machines, that the total elapsed time from the time the buyer deposits the coins in the coin slot up to the time the sandwich appears in the exit platform 18 is reduced (from one minute to a minute and a half, approximately). In addition, the foods 2, 3 are much better preserved in block form than if they are precut. Another advantage lies in the overall capacity of the storage containers 6, 14 to which it is necessary to add that of the spare storage container 36, thus permitting that the machine provides a considerable quantity of sandwiches (from 75 to 100, approximately) without requiring the replacement of the bread slices.

Neither the means of driving the machine's movable elements, nor the microprocessor, nor other control and coordination means of all motion of such elements have been described in detail, since they are out of the scope of the invention.

## Claims

1. Machine for the preparation and sale of hot sandwiches, comprising
- bread slice storage containers (6, 14),
- a moveable container (1), provided with compartments for solid foods designed to be situated between two bread slices, which lower bases (1a) are open, protruding from each one, a block (2, 3) of a different food type, which is supported by a fixed plate (1b) facing a blade (8) which slices the blocks when the container performs a sequential forward movement
- pushers (10, 16) for locating the sandwich in a heating grill (11) formed by two grids (12, 13),
- control devices for the grill temperature and operation time,
- means (17) for ejecting the prepared sandwich to an exit, and
- a conventional coin slot for receiving the stipulated coins so as to activate the machine mechanisms and designed for preparing and supplying the hot sandwiches,
characterized by the fact that the bread slice containers (6, 14) have the upper base open for the exiting of the bread slices (7, 15) which are pushed by a lifter located beneath the stacked bread slices; the open base of one of the containers is at the same height as a moveable platform (4) located beneath the fixed plate (1b), between the said plate and the moveable platform running a pusher (9) that displaces the upper bread slice (7) until it is situated on the moveable platform (4) which performs forward and backward movements in order to displace the bread slice (7), locating it beneath the food blocks (2, 3) so that the cut slices are deposited over the bread slice; on top of the aforementioned platform runs a second pusher (10) that displaces the bread slice with the food slices to a lower plane (21) of a moveable layered separator (19) which is situated between the grids of the grill (11) and which has an upper plane (20) situated at the height of a second storage container (14) of bread slices (15); substantially at the same level as that of the open base there is a pusher (16) that situates a bread slice in the upper plane (20) of the separator; being this latter, displaceable with respect to the position of the grill which, in its turn is provided with carriage stops (11a) that secure the bread slices with the corresponding food slices in between, forming the sandwich (37).

2. Machine for the preparation and sale of hot sandwiches, according to claim 1, characterized by the fact that storage containers containing the stacked bread slices are open at their lower and upper faces, rotating drums (30, 31) carrying a series of box containers (36) of stacked refill bread slices being below each one of these storage containers, designed to interface with the lower bases of the containers.

3. Machine for the preparation and sale of hot sandwiches, according to claims 1 and 2, characterized by the fact that each drum is mounted on an oscillating arm (32, 33) in order to locate them in the work or repose positions.

4. Machine for the preparation and sale of hot sandwiches, according to claims 1 to 3, characterized by the fact that the drums (30, 31) are located at different heights, while the container that is positioned on top of the drum located at a lesser elevation has a longitudinal extension in the lower part which is equal to the height of the drum.

5. Machine for the preparation and sale of hot sandwiches, according to claim 1, characterized by the fact that, in front of the grill (11), an exit platform (18) is located between two gates, the prior an oscillating gate (23) and the latter a curtain style runner gate (26).

6. Machine for the preparation and sale of hot sandwiches, according to claims 1 and 5, characterized by the fact that it comprises a napkin (24) distributing mechanism (25) with an exit slot (23) that empties onto the exit platform.

7. Machine for the preparation and sale of hot sandwiches, according to claim 1, characterized by the fact that the grill consists of an upper fixed grid (12) and a lower grid (13) displaceable according to a vertical movement.

8. Machine for the preparation and sale of hot sandwiches, according to claim 1, characterized by the fact that the moveable food (2, 3) container (1) is refrigerated.

9. Machine for the preparation and sale of hot sandwiches, according to claim 1, characterized by the fact that the pushers (9 and 19) are constituted each one of a conveying arm (9' and 16') situated, at its corresponding operative end, on the respective lower bread slices (7) and upper bread slices (15) storage container (6 and 14) and act on said bread slices, which are withdrawn by means of suction, conveyed and deposited, upon ceasing of suction, the lower bread slices (7) towards a tray (4'), wherein they will receive the food slices (2a and 3a), and the upper bread slices (15) towards the separator (19).

10. Machine for the preparation and sale of hot sandwiches, according to claim 9, characterized by the fact that the lower bread slice (7) conveyor arm (9'), in an horizontal disposition, performs an upward and downward arcuate movement (D) from the storage container (6) to the tray (4'), and vice versa, said movement being driven by two rotatabily arms (49 and 41) articulated to said arm (9').

11. Machine for the preparation and sale of hot sandwiches, according to claim 9, characterized by the fact that the upper bread slice (15) conveyor arm (16'), in an horizontal disposition, performs a plane movement from the storage container (14) to the separator (19) and vice versa, said movement being driven by a rotatabily articulated tie rod (48).
